# EUROPEAN PATENT APPLICATION

(11) **EP 1 734 768 A1**
(43) Date of publication of application: **20.12.2006**
(21) Application number: 05253703.2
(22) Date of filing: 15.06.2005
(51) Int. Cl.: H04N 7/26

(54) **Adaptive video with intra/inter mode decision based on network congestion**

(71) Applicant: MATSUSHITA ELECTRIC INDUSTRIAL CO., LTD., Osaka 540-6319 (JP)
(72) Inventor: Zaharia, Ramona c/o Panasonic Broadband Comm., Wellington Road Berkshire RG40 2AQ (GB)
(74) Representative: Haley, Stephen

(57) **Abstract**

A method and apparatus for encoding video data in a real-time communication system. A video data signal comprises frames of images and; each frame of the video data signal is classified with parts of the frame as key parts or non-key parts to form a key group and a non-key group. Each group is divided into macro-blocks to form key macro-blocks and non-key macro-blocks. For each macro-block, a preferred encoding mode based on whether the macro-block is part of the key group or the non-key group is determined, and for each macro-block, the value of a metric indicative of a level of visual complexity in the macro-block calculated.

## Description

The present invention relates to a system and method for adaptively encoding a video signal with INTER or INTRA mode coding based, in part, on network congestion.

Modern video communication uses digital video captured from a camera or a synthesizer using appropriate tools such as animation software. In an optional pre-processing step, a sender may want to pre-process the video using format conversion or enhancement techniques. An encoder then encodes the video and represents the video as a bit stream. After transmission of the bit stream over a communications network, the decoder decodes the video which gets displayed after an optional post-processing step which may include format conversion, filtering to suppress coding artifacts, error concealment or video enhancement.

In such a system, the video standard used defines the syntax and semantics of the bit stream as well as the processing which the decoder needs to perform when decoding the bit stream into video. The standard does not define how encoding or other video pre-processing is performed. Thus, the methods used in pre-processing a video signal is an area where different manufactures provide competing tools to create a coded video stream optimized for specific applications having different specific constraints (e.g. computational resources, error resilience and video resolution).

Typically, prior art systems seek to optimise video encoding in order to strike a balance between maximising image quality and minimising the amount of information which needs to be streamed. These systems generally split video frames into regions (slices) which are considered more important and others which are considered less important. Then, these regions are subdivided into smaller regions (macro-blocks) which can be encoded with more or less precision (compression level) depending on their respective levels of importance.

Generally, macro-blocks can be compressed in one of two ways. The first is know as INTRA-frame coding. INTRA-frame coding is a method of compression which is applied to a still frame (or a macro-block) and exploits redundancy within that frame, known as spatial redundancy. INTER-frame coding is applied to a sequence of video frames, rather than a single frame. Typically, very little information changes from one frame to the next. INTER-frame coding exploits similarities between successive frames, know as temporal redundancy, in order to compress video data. Because of the fact that INTRA-frame coding is done on a frame-by-frame basis, it is clear that video which has been encoded using INTRA-frame coding will be of higher quality. However, INTRA-frame coding will require more computational resources and typically have a much lower compression ratio.

For fast video communication, a coded sequence contains only I and P-slices. I-slices contain INTRA-frame coded macro-blocks. P-slices may contain INTRA-frame coded, INTER-frame coded or skipped macro-blocks.

Although INTRA-frame coding typically provides a higher quality video picture, sometimes, it may be advantageous to INTRA-frame code a macro-block from a P-slice, rather than INTER-frame coding it. There are at least two reasons for INTRA-frame coding. Firstly, when encoding scene cuts or periods of high interframe activity (e.g. violent motion), INTER-frame prediction error may be greater than INTRA-frame prediction error. Hence, the image may be coded at a lower bit rate using INTRA-frame encoding. Secondly, INTRA-frame coded pictures have a better error resilience to channel errors. This is because, in INTER-frame coding, the decoder adds received data to the previous frame to reconstruct the coded picture. Thus, in the event of a channel error, the error propagates into the subsequent frames. The error will then persist until that part of the picture is updated.

To enable INTER and INTRA-frame coding, prior art encoders provide a motion estimator which estimates the relative amount of interframe activity and a mode decision module which decides which encoding mode, either INTER mode or INTRA mode, would be the preferred mode for each frame (or macro-block). Using these two parameters, a decision is made as to which mode of encoding would be appropriate for each specific macro-block, thereby optimising the trade off between computational cost, image quality and a low bit rate. After encoding, the output bitstream is loaded into the output buffer, which is read out for transmission across a data network at intervals and before the buffer is filled.

When encoding sequential frames, several mode decisions have to be made in rapid succession. In theory, for each mode decision, it is possible to try all the possible modes for each macro-block by calculating a cost using a weighted value of the amount of interframe activity and the preferred mode corresponding to each mode and choose the one with the minimum cost. As a result, the computational complexity of the video encoder is dramatically increased, which is problematic in regard to the use of such encoders in practical applications such as real time video communication.

Prior art systems provide a solution to this problem by providing optimisation methods for increasing the speed at which mode decisions are made by the encoder. Due to the advances in mode decision optimisation techniques and increases in transmission system processing power, the bit rate at which current encoders can encode high quality video is, in some circumstances, approaching available network bandwidth.

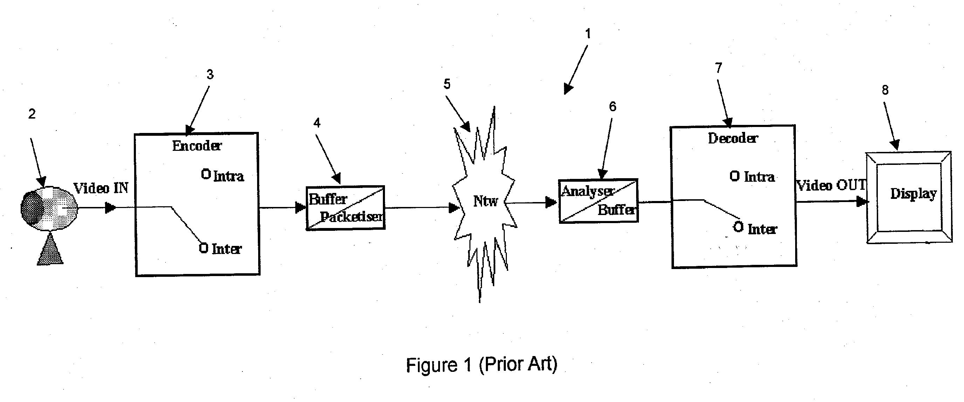

Typically, a conventional video information transmission system (see figure 1) takes a video input which it subjects to sequential compression processing by a real-time encoder at a fixed transmission bit rate. The encoded video data is then packetized and output to an data communications network. Once received by the receiver, the packets are reassembled, decoded and the video is reproduced and displayed on a display system.

During this process, if the state of the network changes and the bandwidth of the network narrows, the sender side continues to transmit data at a fixed transmission rate, equal to or larger than the bandwidth. As a result, network congestion occurs, packet propagation delay grows and packet loss is induced, so that the degradation of video quality eminently appears on the receiver side.

Thus, there is a clear need for a real-time communication system which adaptively optimises video encoding by taking into account available computational resources, image quality and available bandwidth.

In order to provide a solution to problems with the prior art, the present invention provides a method of encoding video data in a real-time communication system, the method comprises the steps of:
inputting a video data signal comprising frames of images;
classifying, for each frame of the video data signal, parts of the frame as key parts or non-key parts to form a key group and a non-key group;
dividing each group into macro-blocks to form key macro-blocks and non-key macro-blocks,
determining, for each macro-block, a preferred encoding mode based on whether the macro-block is part of the key group or the non-key group;
calculating, for each macro-block, the value of a metric indicative of a level of visual complexity in the macro-block;
receiving information indicative of the current level of activity of a network over which the encoded video data will be sent; and
encoding each macro-block in either INTRA or INTER mode coding based on a cost determined using the received information indicative of the current level of activity on the network, the preferred encoding mode of the macro-block and the value of a metric of the macro-block.

Preferably, the images comprise facial features.

Preferably, the key parts comprise data relating to eyes and mouth.

The cost may be determined using a weighted function.

The cost may be determined using an algorithm.

The present invention further provides an apparatus for encoding video data in a real-time communication system, the apparatus comprises:
video data input means arranged to input, in use, frames of video data;
image classifying means arranged to classify, in use, parts of a first frame of the video data signal as key parts or non-key parts of an image to form a key group and a non-key group;
macro-block division means arranged to divide, in use, each group into macro-blocks to form key macro-blocks and non-key macro-blocks;
mode decision means arranged to select, in use, a preferred encoding mode for each macro-block, based on whether the macro-block is part of the key group or the non-key group;
motion estimation means arranged to calculate, in use, the value of a metric for each macro-block, the value being indicative of a level of visual complexity of the macro-block;
network monitoring means arranged to receive information indicative of the current level of activity on a network being used to transmit the video data;
encoding means for encoding each macro-block in either INTRA or INTER mode coding based on a cost determined using the information indicative of the current level of activity on the network, the preferred encoding mode of the macro-block and the calculated value of a metric of the macro-block.

Preferably, the images comprise facial features.

Preferably, the key parts comprise data relating to eyes and mouth.

The cost may be determined using a weighted function.

The cost may be determined using an algorithm.

In the drawings:
Figure 1 represents a communication system according to the prior art.
Figure 2 represents a communication system according to one embodiment of the present invention.
Figure 3 is a pre-processor according to one embodiment of the present invention.
Figure 4 represents a matrix for combined encoder-assessor decision making according to one embodiment of the present invention.
Figure 5 represents a mode decision example according to one embodiment of the present invention.

As described above, figure 1 shows a video communication system 1 according to the prior art. A video camera 2 sends a video signal to an encoder 3 which encodes the video signal using either INTER or INTRA frame coding. The encoded signal is then sent to a buffer/packetiser 4 where the INTER and INTRA frame coded mega-blocks are packetised and stored in the buffer for transmission over a network 5. On the receiving end, an analyser/buffer 6 stores received packets before de-packetising them and sending them to a decoder 7. Then, for each received mega-block, the decoder 7 uses information embedded in the bit stream to determine whether to use INTER or INTRA frame decoding in order to reconstitute a video signal which can be displayed on display 8.

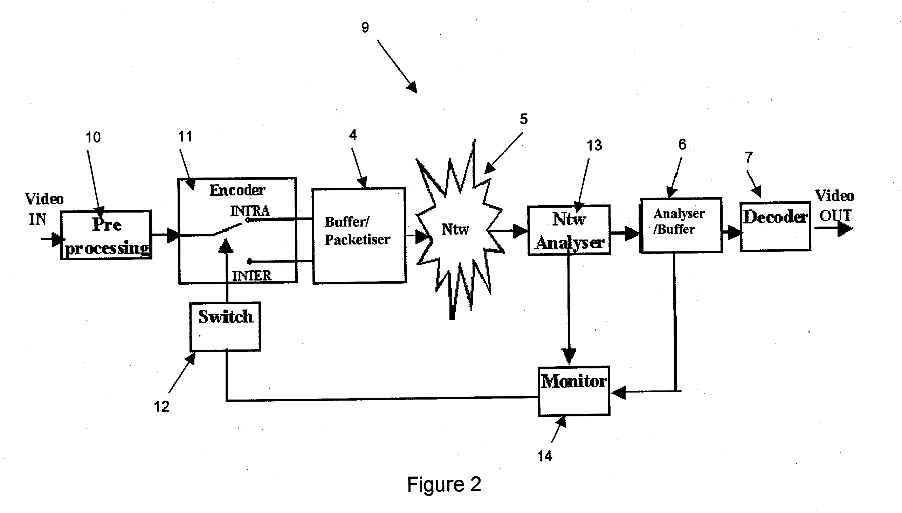

Now, with reference to figure 2, the video information communication transmission system 9 of the present invention comprises, at the sender side, a pre-processing means 10 comprising an image analyser capable of separating a facial image into key and non-key layers. This key and non-key layer information is incorporated into a waveform video encoder 11. The encoder 11 performs encoding of the pre-processed video data. A buffer/packetiser 4 packetises and stores the encoded video data before sending it through a data communications network 5.

At the receiver side, a network analyser 13 analyses the activity on the network 5 and sends feedback information to the sender side regarding the status of this activity. The network analyser 13 performs a monitoring function and provides feedback to the sender side via a monitor 14. The monitor 14 activates a switch 12 according to the signal received from the network analyser 13 as a result of its monitoring function in order to switch between the INTRA and INTER modes. Also, at the receiver side, an analyser/buffer 6 is used for short term storage of packets arrived through the communication channel. The analyser/buffer 6 will receive all the packets encoded in either INTRA or INTER mode. A decoder 7 reads out the content of the analyser/buffer 6 and decodes each packet according to its corresponding encoding method. If the packet contains information generated by INTRA mode compression, the packet is decoded in INTRA mode.

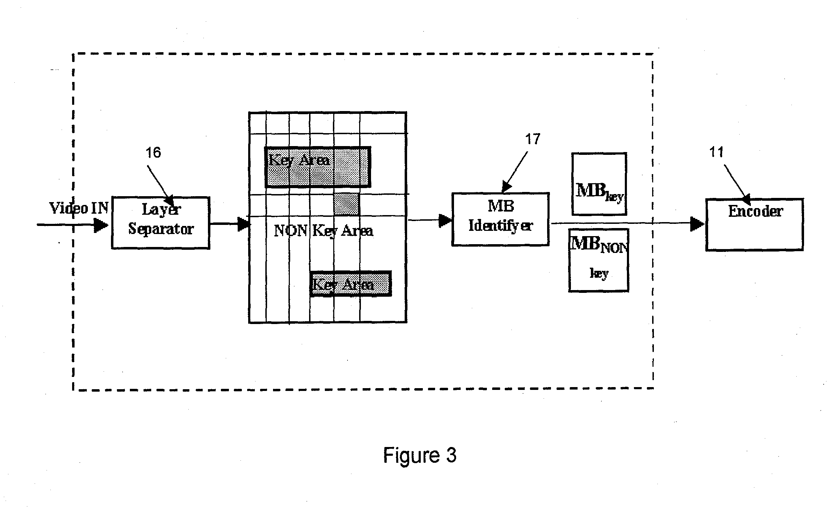

Now, with reference to figure 3, the pre-processing stage will be described. The separation process is performed by using the features of an image in the video data. Previous experiments for face-to-face video communication in real time have proved that significantly better results in terms of the time of communication can be achieved if various features of the face image are exploited before encoding. This is due to the fact that most facial motions are repetitive and that different components of the face (e.g. eye region, mouth region, rest of the face) and the background can tolerate different levels of error because of their different perceptual importance. Therefore, to take advantage of the perceptual differences among face regions, a video frame can be divided into the face and the background and the face can be further decomposed into multiple layers according to their level of perceptual importance (i.e. key and non-key layers).

According to the present invention, a non-key layer contains regions of the face image which are likely to have low perceptual importance while a key layer contains the rapidly changing parts of the face image (e.g. lips and eyes), requiring higher resolution and indeed having a high perceptual importance.

The layer separation process can be based on an approach that uses very limited knowledge of the face (as opposed to complicated image processing face detection methods) for a fast localization of the face layers. A simple example of decomposition can be based on approximate face position, which can be estimated easily and robustly by existing face detection techniques.

After separation into layers, each layer of the current frame is further decomposed into macro-blocks of size 16x16 pixels. Alternatively, the macro-blocks may be of any other suitable size. The macro-blocks are read in scan order and a macro-block identifier 17 will "mark" each macro-block as key or non-key macro-blocks depending on the layer they belong to. All macro-blocks are fed into an encoder 11, which then encodes the macro-blocks in either INTRA or INTER mode.

The macro-block identifier 17 suggests a preferred mode (i.e. key or non-key) of encoding for each macro-block. Macro-blocks belonging to a key-layer contain information of high perceptual importance and thus INTRA mode conding will be preferred. Similarly, if a macro-block belongs to a non-key layer, the preferred encoding mode is INTER in that because of the relatively low level of perceptual importance of the non-key layers, the non-key macro-blocks are more tolerant to encoding error.

The encoder 11 then calculates, for each macro-block, a metric indicating the level of visual activity in a macro-block. This metric may be for example the pixel variance of the macro-block. A small metric will indicate a low level of activity in the evaluated macro-block.

At the decoder side, a network analyser 13 monitors the status of traffic on the network and feeds this information to the encoder 11. Since the size of the packets to be transported over the communication channel will depend on the encoding method, when receiving the feedback information, the encoder will incorporate this information when making the ultimate choice of the encoding mode. This is clearly advantageous because of the fact that when encoding in INTER mode, the buffer/packetiser 4 will be filled with shorter packets that can be transmitted when channel conditions are less than optimal. However, when the encoder encodes in INTRA mode, the buffer/packetiser 4 will contain longer packets that require better conditions for safe transmission.

Thus, in making a decision as to which mode to encode macro-blocks in, three indicators are taken into consideration by encoder 11: the preferred mode, which is dependent on whether the macro-block is a key macro-block or a non-key macro-block; the value of the calculated metric for the macro-block, indicative of the level of visual activity in the macro-block; and finally, network congestion.

Once encoded, key and non-key macro-blocks are placed into packets which are placed into the buffer/packetiser 4 without waiting for the whole layer to be encoded. The packets are then ready to be read out onto the network 5 if the network allows. If a macro-block is encoded in INTRA mode, only the spatial redundancy within the picture is encoded without reference to the temporal relationship to other frames. Consequently, the packets generated are larger in size. Hence the buffer/packetiser 4 will accommodate bigger size packets when macro-blocks are encoded in INTRA mode and smaller size packets when macro-blocks are encoded in INTER mode.

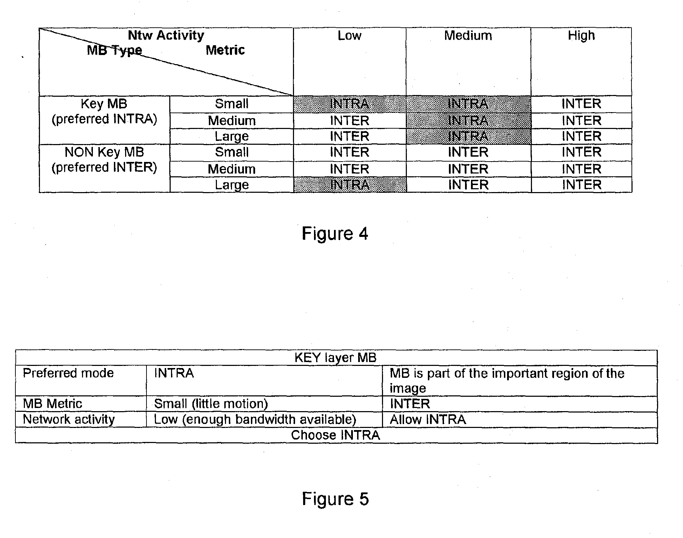

Now, with reference to figures 4 and 5, a description of how a decision is made to encode a macro-block in a specific mode is included here. The example of figure 5 is directed to the encoding of a key layer macro-block. Because the macro-block belongs to a key layer, the preferred mode of encoding is INTRA. This is typically because the macro-block is part of the important region of the face image (e.g. eyes or mouth). The metric value of the macro block is then calculated and, if found to be small (indicative of little or no visual activity) the macro-block could be encoded in INTER mode. The final parameter which is considered is the network activity indicator. If, for example, the network is experiencing little or no traffic and enough bandwidth is available, then the network may allow for encoding of the macro-block in INTRA mode. In this example, because the proportion of INTRA/INTER is for this case 2:1, the final decision for the macro-block encoding mode is INTRA. As will be appreciated by one skilled in the art, other ways of weighting and tabulating the input parameters involved in choosing an encoding mode can be used. Thus, any one of multiple algorithms or weighted functions incorporating the specified parameters, which are the preferred mode, the value of the calculated metric and an indication of network congestion, can be used as decision mechanisms for mode decisions.

The present invention thus provides an improved apparatus and method for choosing an encoding mode in accordance with congestion information on a data communications network.

## Claims

1. A method of encoding video data in a real-time communication system, the method comprising the steps of:
inputting a video data signal comprising frames of images;
classifying, for each frame of the video data signal, parts of the frame as key parts or non-key parts to form a key group and a non-key group;
dividing each group into macro-blocks to form key macro-blocks and non-key macro-blocks,
determining, for each macro-block, a preferred encoding mode based on whether the macro-block is part of the key group or the non-key group;
calculating, for each macro-block, the value of a metric indicative of a level of visual complexity in the macro-block;
receiving information indicative of the current level of activity of a network over which the encoded video data will be sent; and
encoding each macro-block in either INTRA or INTER mode coding based on a cost determined using the received information indicative of the current level of activity on the network, the preferred encoding mode of the macro-block and the value of a metric of the macro-block.

2. A method according to claim 1, wherein the images comprise facial features.

3. A method according to claim 2, wherein the key parts comprise data relating to eyes and mouth.

4. A method according to any one of the proceeding claims, wherein the cost is determined using a weighted function.

5. A method according to any one of claims 1 to 3, wherein the cost is determined using an algorithm.

6. An apparatus for encoding video data in a real-time communication system, the apparatus comprising:
video data input means arranged to input, in use, frames of video data;
image classifying means arranged to classify, in use, parts of a first frame of the video data signal as key parts or non-key parts of an image to form a key group and a non-key group;
macro-block division means arranged to divide, in use, each group into macro-blocks to form key macro-blocks and non-key macro-blocks;
mode decision means arranged to select, in use, a preferred encoding mode for each macro-block, based on whether the macro-block is part of the key group or the non-key group;
motion estimation means arranged to calculate, in use, the value of a metric for each macro-block, the value being indicative of a level of visual complexity of the macro-block;
network monitoring means arranged to receive information indicative of the current level of activity on a network being used to transmit the video data;
encoding means for encoding each macro-block in either INTRA or INTER mode coding based on a cost determined using the information indicative of the current level of activity on the network, the preferred encoding mode of the macro-block and the calculated value of a metric of the macro-block.

7. An apparatus according to claim 4, wherein the images comprise facial features.

8. An apparatus according to claim 5, wherein the key parts comprise data relating to eyes and mouth.

9. An apparatus according to any one of claims 6 to 8, wherein the cost is determined using a weighted function.

10. An apparatus according to any one of claims 6 to 8, wherein the cost is determined using an algorithm.
